# EUROPÄISCHE PATENTSCHRIFT

(11) **EP 2 027 223 B1**
(45) Veröffentlichungstag und Bekanntmachung des Hinweises auf die Patenterteilung: **10.12.2014**
(21) Anmeldenummer: 07728913.0
(22) Anmeldetag: 09.05.2007
(51) Int. Cl.: C09D 183/08

(54) **KRATZ- UND ABRIEBFESTE BESCHICHTUNGEN AUF POLYMEREN OBERFLÄCHEN**
SCRATCH- AND ABRASION-RESISTANT COATINGS ON POLYMERIC SURFACES
REVÊTEMENTS RÉSISTANT À L'ABRASION ET AUX ÉRAFLURES SUR DES SURFACES POLYMÈRES

(30) Priorität: 14.06.2006 DE 102006027480
(43) Veröffentlichungstag der Anmeldung: 25.02.2009
(73) Patentinhaber: Evonik Degussa GmbH, 40474 Düsseldorf (DE)
(72) Erfinder: BERGANDT, Heike, 45772 Marl (DE); ULRICH, Liv, 58452 Witten (DE); WILKES, Marie-Theres, 46284 Dorsten (DE)
(86) Internationale Anmeldenummer: PCT/EP2007/054461
(87) Internationale Veröffentlichungsnummer: WO 2007/144235

(56) Entgegenhaltungen:
- WO-A-2005/003218
- US-A1- 2003 069 350
- US-B1- 6 506 921

## Beschreibung

Die vorliegende Erfindung betrifft ein Verfahren zur Herstellung von kratzfesten, harten Oberflächenbeschichtungen über die Sol-Gel-Technologie auf unterschiedlichsten Polymeren, eine Zusammensetzung, die in diesem Verfahren verwendet wird, sowie einen nach dem Verfahren erhältlichen beschichteten Artikel.

Die Herstellung glasartiger Beschichtungen auf Stahl oder Polymeren ist seit langem bekannt und vielfach beschrieben.

Unter Kratzfestigkeit wird an dieser Stelle und im Folgenden die Widerstandsfähigkeit der Oberflächenbeschichtung eines Materials gegen die Anbringung von Kratzern verstanden, die mit einem Schmissbeständigkeitsprüfer ermittelt wird. Eine Scheibe mit definierter Form und Größe wird mit einer definierten Kraft, der in N gemessenen Anpresskraft, auf das mit der Oberflächenbeschichtung versehene Material gedrückt und in einer definierten Neigung unter Beibehaltung dieser Anpresskraft in einer fliessenden Bewegung über die Oberfläche der Oberflächenbeschichtung geführt. Diese Bewegung wird mit einer vergrößerten Anpresskraft so oft wiederholt, bis eine strichartige Veränderung der Oberfläche sichtbar wird. Die dann eingestellte Anpresskraft ist im Rahmen der vorliegenden Erfindung das Maß für die Kratzfestigkeit. Im Rahmen der vorliegenden Erfindung wird der Schmissbeständigkeitsprüfer Modell 435 der Firma ERICHSEN GmbH & Co KG, Am Iserbach 14, D-58675 Hemer, verwendet.

Unter Abriebfestigkeit wird an dieser Stelle und im Folgenden der Gewichtsverlust verstanden, den die Oberflächenbeschichtung eines Materials aufgrund eines unter definierten Bedingungen bewirkten Abriebs erleidet. Dieser Abrieb wird durch zwei Reibräder bewirkt, deren Stirnflächen eine definierte Rauigkeit aufweisen und die mit definierter Anzahl Umdrehungen mit einer durch die Masse des Reibrades definierten Auflagekraft über die Oberflächenbeschichtung gerieben werden. Die dabei verwendete Vorrichtung ist bei der Firma TABER INDUSTRIES (455 Bryant Street, North Tonawanda, New York 14120, USA, http://www.taberindustries.com) beschrieben und erhältlich.

DE 38 28 098 A1 beschreibt die Herstellung kratzfester Materialien ausgehend von organofunktionellen Silanen und mindestens einem Aluminiumalkoxid. Eine Zusammensetzung, die durch hydrolytische Polykondensation mindestens einer Aluminiumverbindung und mindestens eines organofunktionellen Silans erhalten wird, wird auf ein Substrat aufgebracht und durch Erhitzen gehärtet. Ein besonderer Schritt in der Herstellung der Zusammensetzung ist darin zu sehen, dass diese durch Zugabe von Wasser in einem unterstöchiometrischen Verhältnis vorkondensiert werden muss, bevor die Zusammensetzung auf das Substrat aufgetragen wird. Das Wasser muss in mehreren Stufen zugegeben werden, um unerwünschte Ausfällungen zu vermeiden.

Auch in DE 39 17 535 A1 ist die Herstellung von Zusammensetzungen für kratzfeste Beschichtungen auf der Grundlage hydrolysierbarer Siliciumverbinden beschrieben. Neben organofunktionellen Silanen werden Aluminium-, Titan- und/oder Zirkonalkoxide eingesetzt. Zur Erzielung der Kratzfestigkeit wird ein leichtflüchtiger Teil der Hydrolyseverbindungen abgedampft. In diesem Verfahren wird ebenfalls durch die Zugabe von Wasser in einem unterstöchiometrischen Verhältnis das Gemisch hydrolysierbarer Siliciumverbindungen vorkondensiert, was einen gesonderten Verfahrensschritt erforderlich macht. Diese Vorkondensation kann durch Verwendung eines Kondensationskatalysators beschleunigt werden. Erst nach der Vorkondensation und dem Abdampfen leichtflüchtiger Hydrolyseverbindungen wird die Zusammensetzung auf das Substrat aufgebracht und anschließend einige Minuten bis zwei Stunden durch Erhitzen gehärtet.

Eine Kombination von Alkoxiden aus Al, Ti und/oder Zr mit mindestens einem organofunktionellen Silan wird in US 4,746,366 beschrieben. Diese Kombination wird durch stufenweise Zugabe von Wasser vorkondensiert. Die Hydrolyseprodukte werden unter Vakuum aus der Kombination entfernt. Das so erhaltene Produkt wird auf ein Substrat aufgebracht und durch thermisches Erwärmen für die Dauer von einigen Minuten bis zu zwei Stunden gehärtet.

Beschichtungsmaterialien zur Herstellung abriebfester Schutzschichten auf Substraten aus Kunststoff werden in DE 199 52 040 A1 und DE 102 457 25 A1 beschrieben. Der in diesen Schriften offenbarte Lack muss in mindestens zwei Schichten, nämlich einer sogenannten Kratzfest- bzw. Grundschicht und einer Deckschicht aufgetragen, vorkondensiert und anschließend zumindest teilweise gehärtet werden. Die Zeit für die Vorkondensation kann durch die Zugabe eines Kondensationsbeschleunigers verkürzt werden. Zur Aushärtung der aus diesen Schichten gebildeten Beschichtung werden Zeiten von mindestens 30 Minuten bei einer Temperatur von 130 °C benötigt.

In DE 40 11 045 A1 wird die Herstellung eines kratzfesten Lackes beschrieben, der mit einem im Handel erhältlichen Photoinitiator versetzt wird. Nach dem Auftragen auf ein Kunststoff-Substrat kann dieser Lack thermisch oder durch Bestrahlen mit UV-Licht gehärtet werden. Durch diese photochemische Behandlung wird eine kurze Aushärtungszeit von 120 Sekunden erreicht.

Allen diesen Veröffentlichungen ist gemeinsam, dass die Herstellung der Beschichtungen bzw. Lacke einen zeitaufwändigen Schritt der Vorkondensation beinhaltet. Ein weiterer Nachteil am Stand der Technik besteht darin, dass die Beschichtungen mehrfach, bis zu einer Dicke der Beschichtung von über 15 µm, aufgetragen werden müssen, um die gewünschte Kratz- oder Abriebfestigkeit zu erlangen. Für solche Beschichtungen muß also ein relativ hoher Zeit- und Kostenaufwand getrieben werden, bis die beschichtete Kunststoffoberfläche belastbar bzw. brauchbar ist. Die allgemein lange Zeit zur Aushärtung, die bis zu zwei Stunden beträgt, wird im Stand der Technik lediglich durch die Verwendung eines Photoinitiators verkürzt, der die Aushärtung mittels UV-Bestrahlung bewirkt. In der bekannten Literatur finden sich keine Informationen über Sol-Gel-technisch erzeugte Beschichtungen oder Lacke, die thermisch innerhalb von Zeiten bis zu 5 Minuten ausgehärtet werden können.

Aufgabe der vorliegenden Erfindung war es, ein gegenüber dem Stand der Technik verbessertes Verfahren zur Herstellung von kratz- und abriebfesten Beschichtungen auf polymeren Oberflächen bereitzustellen, welches einen oder mehrere Nachteile des Standes der Technik nicht aufweist.

Diese Aufgabe wird überraschend durch eine Zusammensetzung gelöst, die
a) mindestens ein Umsetzungsprodukt
   a1) eines Silans der allgemeinen Formel 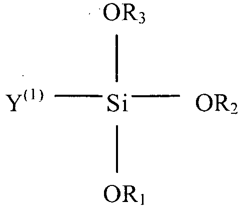 wobei Y⁽¹⁾ = 3-Glycidyloxypropyl-, und R₁, R₂, R₃ = gleiche oder ungleiche Alkylgruppen mit 1 bis 6 Kohlenstoffatomen, und
   a2) eines Silans der allgemeinen Formel 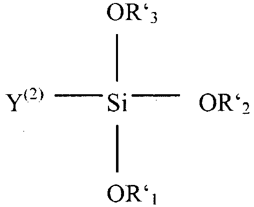 wobei Y⁽²⁾ = N-2-Aminoethyl-3-aminopropyl- oder NH₂(CH₂)₂NH(CH₂)₂NH(CH₂)₃- und R'₁, R'₂, R'₃ = gleiche oder ungleiche Alkylgruppen mit 1 bis 6 Kohlenstoffatomen, und
b) mindestens einen anorganischen Füllstoff, und
c) ein Lösemittel mit einem Siedepunkt bei einer Temperatur ≤ 85 °C, und
d) Wasser, und
e) einen Katalysator, ausgewählt aus anorganischen oder organischen Säuren,
enthält.

Gegenstand der vorliegenden Erfindung ist also eine Zusammensetzung, die
a) mindestens ein Umsetzungsprodukt
   a1) eines Silans der allgemeinen Formel 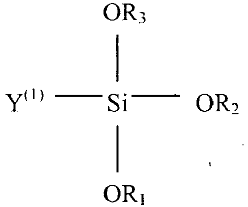 wobei Y⁽¹⁾ = 3-Glycidyloxypropyl-, und R₁, R₂, R₃ = gleiche oder ungleiche Alkylgruppen mit 1 bis 6 Kohlenstoffatomen, und
   a2) eines Silans der allgemeinen Formel 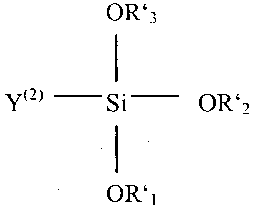 wobei Y⁽²⁾ = N-2-Aminoethyl-3-aminopropyl-
      oder NH₂(CH₂)₂NH(CH₂)₂NH(CH₂)₃-, und R'₁, R'₂, R'₃ = gleiche oder ungleiche Alkylgruppen mit 1 bis 6 Kohlenstoffatomen, und
b) mindestens einen anorganischen Füllstoff, und
c) ein Lösemittel mit einem Siedepunkt bei einer Temperatur ≤ 85 °C, und
d) Wasser, und
e) einen Katalysator, ausgewählt aus anorganischen oder organischen Säuren,
enthält.

Weiterer Gegenstand der Erfindung ist ein Verfahren zur Herstellung einer Oberflächenbeschichtung auf einer polymeren Oberfläche, dadurch gekennzeichnet, dass die erfindungsgemäße Zusammensetzung auf die polymere Oberfläche durch Tauchen, Streichen, Rakeln, Pinseln, Rollen, Walzen, oder Sprühen aufgebracht und dort gehärtet wird.

Gegenstand der Erfindung ist ebenfalls eine Silicium aufweisende Oberflächenbeschichtung, dadurch gekennzeichnet, dass die Oberflächenbeschichtung eine Kratzfestigkeit von 3 N bis 20 N aufweist.

Ebenso ist Gegenstand der Erfindung ein Artikel mit zumindest einer polymeren Oberfläche, die die erfindungsgemäße Oberflächenbeschichtung aufweist.

Weiterer Gegenstand der vorliegenden Erfindung ist die Verwendung des erfindungsgemäßen Artikels für die Verkleidung von Apparaturen, Armaturen, Instrumenten, Messinstrumenten, Sanitäreinrichtungen, Küchengeräten, Haushaltgeräten, Fahrzeuginterieur, Cockpits, Displays, Sichtfenstern oder Möbeln.

Der erfindungsgemäße Artikel kann als Platte, Schale, Formteil, Gehäuse, Knopf, Hebel, Fuß, Tür, Deckel, Boden, Seitenwände, Griff, Ziereinlage oder Spritzschutzelement verwendet werden.

Der erfindungsgemäße Artikel kann auch als Haushaltsgegenstand, Arbeitsgerätschaft für den Haushalt sowie Teile davon, als Gerätekorpus oder Geräteleiste, Geschirr, Party-Besteck, Tablett, Kochutensilie, Blumenvase, Abdeckungen von Wanduhren, Stereoanlagen, Gehäuse von Haushaltsgeräten, Christbaumkugeln, Armbänder, Schmuck, Lampen und Leuchten, Ausrüstung, Geräte und Hilfsmittel für Spiel, Sport und Freizeit, Gartenmöbel, Gartengeräte, Sitzgelegenheiten in Parks oder auf Spielplätzen, Geräte, Hilfsmittel und Vorrichtungen für medizinische Zwecke und Kranke, Brillengestelle, Krankenhauseinrichtungen oder Teile davon verwendet werden.

Der Vorteil des Verfahrens der vorliegenden Erfindung ist, dass die erfindungsgemäße Oberflächenbeschichtung auf einer Kunststoffoberfläche oder einer Polymerfolie bei einer Temperatur von 150 °C innerhalb von lediglich einer Minute aushärtet. Werden solche Oberflächen oder Folien in einem Rolle-zu-Rolle-Verfahren, in einer Bandanlage oder in einem sonstigen kontinuierlichen Verfahren beschichtet, können aufgrund dieser gegenüber dem Stand der Technik kürzeren Zeitdauer für die Aushärtung der erfindungsgemäßen Beschichtung wesentlich höhere Durchlaufgeschwindigkeiten oder Produktionsmengen pro Zeiteinheit realisiert und damit die Herstellungskosten für das Produkt gegenüber dem Stand der Technik deutlich gesenkt werden.

Ein weiterer Vorteil des Verfahrens der vorliegenden Erfindung besteht darin, dass die Oberflächenbeschichtung lediglich ein einziges Mal aufgebracht werden muss, um eine rissfreie und lückenlose Oberflächenbeschichtung zu erhalten.

Unter einer rissfreien Oberflächenbeschichtung wird im Rahmen der vorliegenden Erfindung eine Oberflächenbeschichtung verstanden, die in einer rasterelektronenmikroskopischen (REM) Abbildung der Oberfläche der Oberflächenbeschichtung mit einem Vergrößerungsfaktor von 10000 keinen Riss erkennen läßt, wobei 10 unterschiedliche Stellen an der Oberfläche beurteilt werden.

Die erfindungsgemäße Oberflächenbeschichtung weist eine gegenüber dem Stand der Technik deutlich geringere Dicke von höchstens 5 µm auf. Dadurch ergibt sich als weiterer Vorteil der vorliegenden Erfindung ein geringerer Materialeinsatz für die Oberflächenbeschichtung als bei konventionellen Beschichtungen, so dass gegenüber dem Stand der Technik weitere Kosteneinsparungen erreicht werden können.

Ebenfalls ist ein Vorteil des Verfahrens der vorliegenden Erfindung, dass die thermische Verschweißbarkeit der gemäß erfindungsgemäßem Verfahren beschichteten Polymere durch die erfindungsgemäße Oberflächenbeschichtung nicht beeinträchtigt wird.

Das Verfahren der vorliegenden Erfindung hat den weiteren Vorteil, dass der Schmiss-Test an der erfindungsgemäßen Oberflächenbeschichtung zu wesentlich besseren Ergebnissen, verglichen mit Beschichtungen gemäß des Standes der Technik, führt. Bei bedruckten Polyvinylchlorid-(PVC-)Folien, auf die gemäß des erfindungsgemäßen Verfahrens die erfindungsgemäße Oberflächenbeschichtung aufgebracht wird, bleibt der Druck bis zu einer gemäß Schmiss-Test angewendeten Kraft von 20 N ohne Beschädigung. Bei gemäß Stand der Technik aufgebrachten Beschichtungen auf bedruckten PVC-Folien bewirkt bereits eine Kraft über 2,5 N eine Beschädigung des Druckes.

Nachfolgend werden die erfindungsgemäße Zusammensetzung und das erfindungsgemäße Verfahren beispielhaft beschrieben, ohne dass die Erfindung, deren Schutzbereich sich aus den Ansprüchen und der Beschreibung ergibt, darauf beschränkt sein soll. Auch die Ansprüche selbst gehören zum Offenbarungsgehalt der vorliegenden Erfindung.

Die erfindungsgemäße Zusammensetzung zeichnet sich dadurch aus, dass sie
a) mindestens ein Umsetzungsprodukt
   a1) eines Silans der allgemeinen Formel 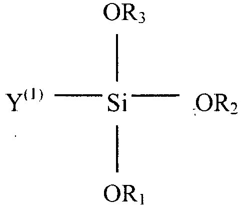 wobei Y⁽¹⁾ = 3-Glycidyloxypropyl-, und R₁, R₂, R₃ = gleiche oder ungleiche Alkylgruppen mit 1 bis 6 Kohlenstoffatomen, und
   a2) eines Silans der allgemeinen Formel 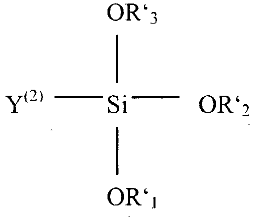 wobei Y⁽²⁾ = N-2-Aminoethyl-3-aminopropyl- oder NH₂(CH₂)₂NH(CH₂)₂NH(CH₂)₃- und R'₁, R'₂, R'₃ = gleiche oder ungleiche Alkylgruppen mit 1 bis 6 Kohlenstoffatomen, und
b) mindestens einen anorganischen Füllstoff, und
c) ein Lösemittel mit einem Siedepunkt bei einer Temperatur ≤ 85 °C, und
d) Wasser, und
e) einen Katalysator, ausgewählt aus anorganischen oder organischen Säuren,
enthält.

Die Alkylgruppen R₁, R₂, R₃ und/oder R'₁, R'₂, R'₃ können in der erfindungsgemäßen Zusammensetzung bevorzugt zumindest paarweise gleich sein. In der erfindungsgemäßen Zusammensetzung können als Alkylgruppen Methyl- und/oder Ethylgruppen besonders bevorzugt sein.

Bevorzugte Zusammensetzungen sind solche, bei denen das Umsetzungsprodukt gemäß Komponente a) auf Diaminoalkyalkoxysilan und/oder Triaminoalkylalkoxysilan basiert.

Die Komponente b) der erfindungsgemäßen Zusammensetzung enthält bevorzugt einen anorganischen Füllstoff, der ausgewählt ist aus SiO₂, TiO₂, ZnO, Al₂O₃, BaSO₄, CeO₂, ZrO₂, oder einem Gemisch aus diesen Füllstoffen. Weiterhin bevorzugt kann der anorganische Füllstoff in der erfindungsgemäßen Zusammensetzung ausgewählt sein aus SiO₂, TiO₂, ZnO, oder aus einem Gemisch dieser Füllstoffe. Ganz besonders bevorzugt kann die Komponente b) der erfindungsgemäßen Zusammensetzung als anorganischen Füllstoff Aerosil^{®} R7200, R8200, R9200 und/oder R812S erhältlich bei Degussa AG, Rodenbacher Chaussee 4 in 63457 Hanau-Wolfgang, enthalten.

Es kann weiterhin vorteilhaft sein, wenn die Komponente b) der erfindungsgemäßen Zusammensetzung Partikel enthält, die eine mittlere Partikelgröße d_{50%} von 10 bis 200 nm, bevorzugt von 20 bis 180 nm, weiterhin bevorzugt von 30 bis 150 nm, weiters bevorzugt von 50 bis 135 nm, besonders bevorzugt von 75 bis 120 nm, weiterhin besonders bevorzugt von 90 bis 110 nm aufweisen.

Vorzugsweise enthält die Zusammensetzung als anorganischen Füllstoff Partikel von SiO₂, TiO₂, ZrO₂, oder ein Gemisch dieser Partikel in den genannten Partikelgrößen.

Es kann weiterhin vorteilhaft sein, wenn die Komponente b) der erfindungsgemäßen Zusammensetzung Partikel enthält, die agglomeriert oder unagglomeriert sein können. Besonders bevorzugt können die Partikel in der Komponente b) der erfindungsgemäßen Zusammensetzung agglomeriert sein. Weiterhin kann es vorteilhaft sein, wenn diese Partikel Aerosil^{®} R7200, R8200, R9200 und/oder R812S enthalten oder sind.

Die Komponente c) der erfindungsgemäßen Zusammensetzung kann ausgewählt sein aus der Reihe der Alkohole der allgemeinen Formel CₙH₂ₙ₊₁OH, wobei n = 1 bis 4, oder einem Gemisch dieser Alkohole, oder ausgewählt sein aus Ketonen, ausgewählt aus Aceton, Methylethylketon, oder einem Gemisch dieser Ketone. Bevorzugt kann die Komponente c) der erfindungsgemäßen Zusammensetzung Methylethylketon (MEK) enthalten. Vorzugsweise ist die Komponente c) der erfindungsgemäßen Zusammensetzung ausgewählt aus Ethanol, 1-Propanol, 2-Propanol, oder einem Gemisch dieser Alkolhole. Ganz besonders bevorzugt ist die Komponente c) der erfindungsgemäßen Zusammensetzung Ethanol.

Die Komponente c) der erfindungsgemäßen Zusammensetzung weist einen Siedepunkt von höchstens 85 °C auf.

Die Komponente e) der erfindungsgemäßen Zusammensetzung kann vorteilhafterweise ausgewählt sein aus wässriger Salpetersäure. Bevorzugt kann die Komponente e) Salpetersäure in der Konzentration von 0,5 bis 1 Gew.-%, besonders bevorzugt von 0,6 bis 0,9 Gew.-%, ganz besonders bevorzugt von 0,65 bis 0,75 Gew.-% enthalten.

Es kann ausserdem vorteilhaft sein, wenn die erfindungsgemäße Zusammensetzung eine weitere Komponente a3) enthält, welche mindestens ein Umsetzungsprodukt eines weiteren Silans 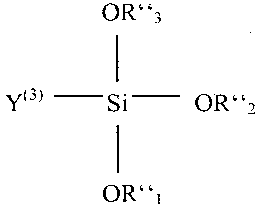 wobei Y⁽³⁾ ausgewählt ist aus fluor-, fluoralkyl-, methacryl-, vinyl-, mercapto-, und R"₁, R"₂, R"₃ = gleiche oder ungleiche Alkylgruppen mit 1 bis 6 Kohlenstoffatomen, sein kann. Bevorzugt können die Alkylgruppen R"₁, R"₂, R"₃ dieser Komponente a3) zumindest paarweise gleich sein. In der erfindungsgemäßen Zusammensetzung können als Alkylgruppen Methyl- und Ethylgruppen besonders bevorzugt sein.

Das erfindungsgemäße Verfahren zur Herstellung einer Oberflächenbeschichtung auf einer polymeren Oberfläche zeichnet sich dadurch aus, dass die erfindungsgemäße Zusammensetzung auf die polymere Oberfläche durch Tauchen, Streichen, Rakeln, Pinseln, Rollen, Walzen, oder Sprühen aufgebracht und dort gehärtet wird.

Bevorzugt wird in dem erfindungsgemäßen Verfahren die erfindungsgemäße Zusammensetzung einmalig auf die polymere Oberfläche aufgebracht und dort gehärtet. Weiterhin bevorzugt wird in dem erfindungsgemäßen Verfahren die erfindungsgemäße Zusammensetzung durch Streichen, Rollen oder Sprühen auf die polymere Oberfläche aufgebracht und dort gehärtet.

Die erfindungsgemäße Zusammensetzung kann in dem erfindungsgemäßen Verfahren vorzugsweise auf eine Temperatur von 90 °C bis 150 °C, besonders bevorzugt auf eine Temperatur von 100 bis 150 °C, weiterhin besonders bevorzugt von 110 bis 150 °C, ganz besonders bevorzugt auf eine Temperatur von 130 bis 150 °C erwärmt werden, wodurch die erfindungsgemäße Zusammensetzung gehärtet werden kann.

Es kann besonders vorteilhaft sein, wenn in dem erfindungsgemäßen Verfahren die erfindungsgemäße Zusammensetzung durch Bestrahlung mit Infrarot-Licht, bevorzugt thermisch, weiterhin bevorzugt in einem Ofen, besonders bevorzugt durch Anblasen mit warmer Luft gehärtet wird.

Es kann ausserdem vorteilhaft sein, wenn in dem erfindungsgemäßen Verfahren die erfindungsgemäße Zusammensetzung durch Erwärmen für die Dauer von 1 bis 300 Sekunden gehärtet wird. Bevorzugt kann die erfindungsgemäße Zusammensetzung durch Erwärmen für die Dauer von 2 bis 250 Sekunden, weiters bevorzugt von 5 bis 200 Sekunden, weiterhin bevorzugt für die Dauer von 10 bis 150 Sekunden, besonders bevorzugt von 20 bis 120 Sekunden, ganz besonders bevorzugt für die Dauer von 30 bis 90 Sekunden gemäß dem erfindungsgemäßen Verfahren gehärtet werden.

Unter dem Zumischen einer Komponente zu der erfindungsgemäßen Zusammensetzung wird an dieser Stelle und im Folgenden das Dispergieren mittels Rühren, Schütteln oder mittels Ultraschallfinger verstanden.

In dem erfindungsgemäßen Verfahren kann es vorteilhaft sein, wenn der erfindungsgemäßen Zusammensetzung die Komponente a1) in einer Menge von 5 bis 40 Gew.-%, bevorzugt von 10 bis 25 Gew.-%, die Komponente a2) in einer Menge von 5 bis 50 Gew.-%, bevorzugt von 10 bis 30 Gew.-%, die Komponente b) in einer Menge von 2 bis 20 Gew.-%, bevorzugt in einer Menge von 2,5 bis 20 Gew.-%, die Komponente c) in einer Menge von 20 bis 60 Gew.-%, bevorzugt von 30 bis 50 Gew.-%, die Komponente d) in einer Menge von 0,5 bis 5 Gew.-%, bevorzugt von 1 bis 3 Gew.-%, die Komponente e) in einer Menge von 0,02 bis 0,5 Gew.-%, bevorzugt von 0,03 bis 0,3 Gew.-%, zugemischt wird, wobei die Mengenangabe jeweils auf die Zusammensetzung bezogen ist, und mit der Maßgabe, dass die Summe der Gewichtsanteile 100 % ergibt.

Um nach dem Aushärten der erfindungsgemäßen Zusammensetzung eine besonders kratz- und abriebfeste Oberflächenbeschichtung zu erhalten, kann es vorteilhaft sein, wenn in dem erfindungsgemäßen Verfahren die Komponenten a1) und a2) der erfindungsgemäßen Zusammensetzung in einem Molverhältnis von 1 : 3 bis 3 : 1 zugemischt werden. Besonders bevorzugt können die Komponenten a1) und a2) der erfindungsgemäßen Zusammensetzung in einem Molverhältnis von 1,5 : 2,5 bis 2,5 : 1,5, ganz besonders bevorzugt in einem Molverhältnis von 1 : 2 bis 2 : 1 zugemischt werden. In dem erfindungsgemäßen Verfahren kann es besonders vorteilhaft sein, wenn diese Zusammensetzung anschließend für die Dauer von 1 Sekunde bis 2 Minuten, bevorzugt für die Dauer von 30 Sekunden bis 1 Minute erwärmt wird, wodurch diese Zusammensetzung gehärtet werden kann.

Es kann weiterhin vorteilhaft sein, wenn in dem erfindungsgemäßen Verfahren die Komponente a3) in einer Menge von 0,5 bis 10 Gew.-%, wobei die Mengenangabe auf die Zusammensetzung bezogen ist, und mit der Maßgabe, dass die Summe der Gewichtsanteile der Komponenten a1), a2), a3), und b) bis e) 100 % ergibt, der erfindungsgemäßen Zusammensetzung zugemischt wird.

Weiterhin kann es vorteilhaft sein, wenn in dem erfindungsgemäßen Verfahren als weitere Komponenten f) Lackbindemittel, ausgewählt aus Melaminharz, Acrylat oder einem Gemisch dieser Lackbindemittel, bevorzugt in einer Menge von 0,001 bis 15 Gew.-%, besonders bevorzugt in einer Menge von 2 bis 10 Gew.-%, ganz besonders bevorzugt in einer Menge von 5 bis 8 Gew.-%, und/oder g) Epoxidharz, vorzugsweise in einer Menge von 0,001 bis 15 Gew.-%, besonders bevorzugt in einer Menge von 2 bis 10 Gew.-%, ganz besonders bevorzugt in einer Menge von 5 bis 8 Gew.-%, wobei die Mengenangabe jeweils auf die Zusammensetzung bezogen ist, und mit der Maßgabe, dass die Summe der Gewichtsanteile der Komponenten a) bis g) 100 % ergibt, der erfindungsgemäßen Zusammensetzung zugemischt werden. Es kann weiterhin vorteilhaft sein, wenn in dem erfindungsgemäßen Verfahren als eine weitere Komponente h) ein anorganischer UV-Absorber, ausgewählt aus Zinkoxid, Ceroxid oder Titandioxid, oder ein Gemisch dieser anorganischen Absorber, und/oder ein organischer UV-Absorber, ausgewählt aus Hydroxyphenylbenzotriazol, Hydroxybenzophenon, HALS-Stabilisatoren, oder ein Gemisch dieser organischen Absorber, der erfindungsgemäßen Zusammensetzung zugemischt wird, und die auf die Oberfläche aufgebrachte erfindungsgemäße Zusammensetzung mit UV-Strahlen behandelt wird.

Unter HALS-Stabilisatoren werden an dieser Stelle und im folgenden sterisch gehinderte Amine verstanden. In dem erfindungsgemäßen Verfahren können bevorzugt HALS-Stabilisatoren, ausgewählt aus Tinuvin 123, erhältlich bei Ciba, oder Lowilite 94, erhältlich bei Great Lakes Chemical Corporation, oder ein Gemisch dieser Stabilisatoren eingesetzt werden.

In dem erfindungsgemäßen Verfahren kann es vorteilhaft sein, wenn der erfindungsgemäßen Zusammensetzung als Komponente b) die Komponente h) zugemischt wird.

Weiterhin kann es in dem erfindungsgemäßen Verfahren vorteilhaft sein, wenn der erfindungsgemäßen Zusammensetzung zunächst die Komponenten a1) und a2), und anschließend die Komponenten b) bis e) zugemischt werden. Besonders vorteilhaft können in dem erfindungsgemäßen Verfahren die Komponenten a1) und a2) der erfindungsgemäßen Zusammensetzung durch Rühren oder Schütteln zugemischt werden. Weiterhin besonders vorteilhaft können in dem erfindungsgemäßen Verfahren die Komponenten a) bis e) durch Rühren der erfindungsgemäßen Zusammensetzung zugemischt werden. Weiterhin besonders vorteilhaft kann es in dem erfindungsgemäßen Verfahren sein, wenn zunächst die Komponente h) in der Komponente c) gelöst und/oder dispergiert wird und diese Lösung und/oder Dispersion der erfindungsgemäßen Zusammensetzung zugemischt wird, bevor die Komponenten a1), a2), b), d) und e) der erfindungsgemäßen Zusammensetzung zugemischt werden. Ganz besonders vorteilhaft kann es in dem erfindungsgemäßen Verfahren sein, wenn zunächst die Komponente b) in der Komponente c) gelöst und/oder dispergiert wird, und der erfindungsgemäßen Zusammensetzung die Komponenten a1), d) und e) zugemischt, dann die aus b) und c) erhaltene Lösung und/oder Dispersion, und anschließend die Komponente a2) zugemischt werden.

In einer weiterhin bevorzugten Ausprägung des erfindungsgemäßen Verfahrens kann die Komponente h) in einer Menge von 0,5 bis 5 Gew.-%, bevorzugt in einer Menge von 1 bis 4 Gew.-%, besonders bevorzugt von 2 bis 3 Gew.-%, wobei die Mengenangabe auf die Zusammensetzung bezogen ist, und mit der Maßgabe, dass die Summe der Gewichtsanteile der Komponenten a) bis h) 100 % ergibt, in der erfindungsgemäßen Zusammensetzung enthalten sein.

Mit dem erfindungsgemäßen Verfahren können Oberflächenbeschichtungen, insbesondere die erfindungsgemäßen Oberflächenbeschichtungen erhalten werden.

Die erfindungsgemäße Silicium aufweisende Oberflächenbeschichtung zeichnet sich dadurch aus, dass die Oberflächenbeschichtung eine Kratzfestigkeit von 3 N bis 20 N aufweist. Vorzugsweise kann die erfindungsgemäße Oberflächenbeschichtung eine Kratzfestigkeit von 6 N bis 20 N, bevorzugt von 8 N bis 20 N, besonders bevorzugt von 10 N bis 20 N, weiterhin besonders bevorzugt von 12 N bis 20 N, ganz besonders bevorzugt von 14 N bis 20 N aufweisen.

Diese Oberflächenbeschichtung weist vorzugsweise eine Abriebfestigkeit von 0,1 bis 0,5 Gew.-%, besonders bevorzugt eine Abriebfestigkeit von 0,2 bis 0,4 Gew.-% auf.

Die erfindungsgemäße Oberflächenbeschichtung kann bevorzugt eine Schichtdicke von 1 bis 10 µm, weiterhin bevorzugt eine Schichtdicke von 1,5 bis 9 µm, besonders bevorzugt von 2 bis 8 µm, weiterhin besonders bevorzugt von 2,5 bis 7 µm, ganz besonders bevorzugt von 3 bis 5 µm aufweisen.

Die erfindungsgemäße Oberflächenbeschichtung kann sich vorteilhafterweise dadurch auszeichnen, dass diese Oberflächenbeschichtung einen anorganischen Füllstoff in Form von Partikeln aufweist, die in dem von der erfindungsgemäßen Oberflächenbeschichtung eingenommenen Volumen eine homogene Verteilung aufweisen, gemessen durch eine rasterelektronenmikroskopische (REM-) Abbildung mit einem Vergrößerungsfaktor von 10000 an einer Fläche, die durch einen Schnitt durch die erfindungsgemäße Oberflächenbeschichtung erhalten wird.

Die erfindungsgemäße Oberflächenbeschichtung kann bevorzugt eine Dehnbarkeit von 0,5 bis 10 %, bevorzugt von 2 bis 7,5 %, ganz besonders bevorzugt von 3 bis 6 % aufweisen. Unter Dehnbarkeit wird im Rahmen der vorliegenden Erfindung die prozentuale Vergrößerung der Länge verstanden, um die das die erfindungsgemäße Oberflächenbeschichtung aufweisende Material längs einer beliebigen gedachten geraden Linie, die in der Oberfläche dieser Oberflächenbeschichtung liegt, gedehnt werden kann, ohne dass die erfindungsgemäße Oberflächenbeschichtung Risse aufweist, gleichbedeutend damit, dass die erfindungsgemäße Oberflächenbeschichtung nach der Dehnung rissfrei bleibt.

Die erfindungsgemäße Oberflächenbeschichtung kann vorteilhafterweise eine thermische Verschweißbarkeit aufweisen. Unter einer thermisch verschweißbaren Oberflächenbeschichtung wird im Rahmen der vorliegenden Erfindung eine Oberflächenbeschichtung verstanden, die nach dem thermischen Verschweißen von zwei polymeren Folien, die die erfindungsgemäße Oberflächenbeschichtung aufweisen, entlang der Naht der thermischen Verschweißung im Rahmen der Definition für Rissfreiheit rissfrei ist. In einer bevorzugten Ausführungsform verläuft die Naht der thermischen Verschweißung in der Oberfläche der erfindungsgemäßen Oberflächenbeschichtung.

Die erfindungsgemäße Oberflächenbeschichtung kann nach dem erfindungsgemäßen Verfahren erhalten werden.

Gegenstand der vorliegenden Erfindung ist auch ein Artikel mit zumindest einer polymeren Oberfläche, der die erfindungsgemäße Oberflächenbeschichtung aufweist.

Dieser Artikel kann vorzugsweise eine polymere Oberfläche aufweisen, die ausgewählt sein kann aus Polyvinylchlorid (PVC), Polyethylenterephtalat (PET), Polyethylen (PE), Polycarbonat (PC), Polymethylmethacrylat (PMMA), oder einer Kombination dieser polymeren Oberflächen.

Der erfindungsgemäße Artikel kann für die Verkleidung von Apparaturen, Armaturen, Instrumenten, Messinstrumenten, Sanitäreinrichtungen, Küchengeräten, Haushaltsgeräten, Fahrzeuginterieur, Cockpits, Displays, Sichtfenstern oder Möbeln verwendet werden, oder ein solcher Artikel sein.

Weiterhin kann der erfindungsgemäße Artikel als Platte, Schale, Formteil, Gehäuse, Knopf, Hebel, Fuß, Tür, Deckel, Boden, Seitenwände, Griff, Ziereinlage oder Spritzschutzelement verwendet werden, oder ein solcher Artikel sein.

Vorzugsweise kann der erfindungsgemäße Artikel als Haushaltsgegenstand, Arbeitsgerätschaft für den Haushalt sowie Teile davon, als Gerätekorpus oder Geräteleiste, Geschirr, Party-Besteck, Tablett, Kochutensilie, Blumenvase, Abdeckungen von Wanduhren, Stereoanlagen, Gehäuse von Haushaltsgeräten, Christbaumkugeln, Armbänder, Schmuck, Lampen und Leuchten, Ausrüstung, Geräte und Hilfsmittel für Spiel, Sport und Freizeit, Gartenmöbel, Gartengeräte, Sitzgelegenheiten in Parks oder auf Spielplätzen, Geräte, Hilfsmittel und Vorrichtungen für medizinische Zwecke und Kranke, Brillengestelle, Krankenhauseinrichtungen oder Teile davon verwendet werden.

### Beispiel 1.

5,6 g 3-Glycidoxypropyltriethoxysilan wurden in ein Rührgefäß vorgelegt und 5 mg konzentrierte Salpetersäure und 0,495 g Wasser unter Rühren dazugegeben. Nach 10-minütigem Rühren wurde eine einphasige Lösung erhalten. In diese Lösung wurden 1,63 g Aerosil R8200, die zuvor mittels Ultraschallfinger in 6,51 g Methylethylketon dispergiert wurden, dazugegeben. Anschließend wurden 4,78 g N-2-Aminoethyl-3-aminopropyltrimethoxysilan (DAMO) innerhalb einer Zeitdauer von 5 Minuten dazugegeben.

Die so erhaltene Zusammensetzung wurde mittels einer Spiralrakel in einer Stärke von 25 µm auf eine PVC-Folie gerakelt und in einem Ofen bei einer Temperatur von 150 °C während 1 Minute gehärtet. Die so gehärtete Schicht wies eine Dicke von 3 µm auf.

Der Schmiss-Test, gemessen mit einem Schmissbeständigkeitsprüfer Modell 435, der Firma Erichsen GmbH, ergab eine Kratzfestigkeit von 20 N.

Die Abriebfestigkeit wurde mittels TaberAbraser mit dem Reibrad CS 10, einer Auflagemasse von 500 g nach 100 Umdrehungen gemessen. Nach 100 Umdrehungen wurde ein Gewichtsverlust von 0,1 Gew.-% ermittelt.

### Vergleichsbeispiel 1.

5,6 g 3-Glycidoxypropyltriethoxysilan wurden in ein Rührgefäß vorgelegt und 5 mg konzentrierte Salpetersäure und 0,495 g Wasser unter Rühren dazugegeben. Nach 10-minütigem Rühren wurde eine einphasige Lösung erhalten. In diese Lösung wurden 1,63 g Aerosil R8200, die zuvor mittels Ultraschallfinger in 6,51 g Methylethylketon dispergiert wurden, dazugegeben. Abschließend wurden 4,75 g 3-Aminopropyltriethoxysilan innerhalb einer Zeitdauer von 5 Minuten dazugesetzt.

Die so erhaltene Zusammensetzung wurde mittels einer Spiralrakel in einer Stärke von 25 µm auf eine PVC-Folie gerakelt und in einem Ofen bei einer Temperatur von 150 °C während 2 Minuten gehärtet. Die gehärtete Oberflächenbeschichtung wies eine Dicke von 3 µm auf.

Der Schmiss-Test, gemessen mit einem Schmissbeständigkeitsprüfer Modell 435, der Firma Erichsen GmbH, ergab eine Kratzfestigkeit von 5 N.

Die Abriebfestigkeit wurde mit dem TaberAbraser Gerät der Firma TABER INDUSTRIES, 455 Bryant Street, North Tonawanda, New York 14120, USA, mit einem Reibrad CS 10, unter einer Auflagemasse von 500 g nach 100 Umdrehungen zu 1 Gew.-% ermittelt.

## Patentansprüche

1. Zusammensetzung, die
a) mindestens ein Umsetzungsprodukt
a1) eines Silans der allgemeinen Formel 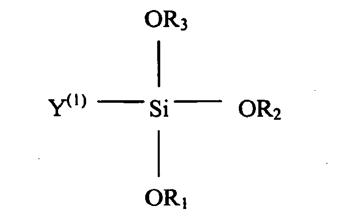 wobei
Y⁽¹⁾ = 3-Glycidyloxypropyl-, und
R₁, R₂, R₃ = gleiche oder ungleiche Alkylgruppen mit 1 bis 6 Kohlenstoffatomen, und
a2) eines Silans der allgemeinen Formel 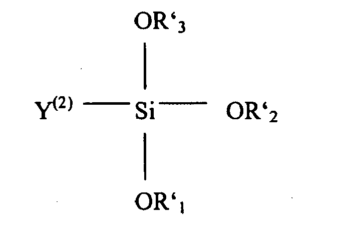 wobei
Y⁽²⁾=N-2-Aminoethyl-3-aminopropyl- oder NH₂(CH₂)₂NH(CH₂)₂NH(CH₂)₃-
und R'₁, R'₂, R'₃ = gleiche oder ungleiche Alkylgruppen mit 1 bis 6 Kohlenstoffatomen, und
b) mindestens einen anorganischen Füllstoff, und
c) ein Lösemittel mit einem Siedepunkt bei einer Temperatur ≤ 85 °C, und
d) Wasser, und
e) einen Katalysator, ausgewählt aus anorganischen oder organischen Säuren, enthält.

2. Zusammensetzung nach Anspruch 1,
**dadurch gekennzeichnet,**
**dass** der anorganische Füllstoff eine mittlere Partikelgröße d_{50%} von 10 bis 200 nm aufweist.

3. Zusammensetzung nach Anspruch 1 oder 2,
**dadurch gekennzeichnet,**
**dass** die Zusammensetzung eine weitere Komponente
a3), welche mindestens ein Umsetzungsprodukt eines weiteren Silans 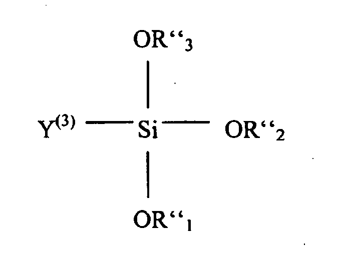
wobei Y⁽³⁾ ausgewählt ist aus fluor-, fluoralkyl-, methacryl-, vinyl-, mercapto-,
und R"₁, R"₂, R"₃ = gleiche oder ungleiche Alkylgruppen mit 1 bis 6 Kohlenstoffatomen, ist, enthält.

4. Verfahren zur Herstellung einer Oberflächenbeschichtung auf einer polymeren Oberfläche,
**dadurch gekennzeichnet,**
**dass** eine Zusammensetzung gemäß zumindest einem der Ansprüche 1 bis 3 auf die polymere Oberfläche durch Tauchen, Streichen, Rakeln, Pinseln, Rollen, Walzen, oder Sprühen aufgebracht und dort gehärtet wird.

5. Verfahren nach Anspruch 4,
**dadurch gekennzeichnet,**
**dass** der Zusammensetzung Komponente
a1) in einer Menge von 5 bis 40 Gew.-%, und
a2) in einer Menge von 5 bis 50 Gew.-%, und
b) in einer Menge von 2 bis 20 Gew.-%, und
c) in einer Menge von 20 bis 60 Gew.-%, und
d) in einer Menge von 0,5 bis 5 Gew.-%, und
e) in einer Menge von 0,02 bis 0,5 Gew.-%,
wobei die Mengenangabe jeweils auf die Zusammensetzung bezogen ist, und mit der Maßgabe, dass die Summe der Gewichtsanteile 100 % ergibt, zugemischt wird.

6. Verfahren nach Anspruch 4 oder 5,
**dadurch gekennzeichnet,**
**dass** der Zusammensetzung die Komponente a1) und a2) in einem Molverhältnis von 1 : 3 bis 3 : 1 zugemischt werden.

7. Verfahren nach zumindest einem der Ansprüche 4 bis 6,
**dadurch gekennzeichnet,**
**dass** der Zusammensetzung die Komponente a3) in einer Menge von 0,5 bis 10 Gew.-%, wobei die Mengenangabe auf die Zusammensetzung bezogen ist, und mit der Maßgabe, dass die Summe der Gewichtsanteile der Komponenten a1), a2), a3), und b) bis e) 100 % ergibt, zugemischt wird.

8. Verfahren nach zumindest einem der Ansprüche 4 bis 7,
**dadurch gekennzeichnet,**
**dass** die Zusammensetzung auf eine Temperatur von 90 °C bis 150 °C erwärmt wird, wodurch die Zusammensetzung gehärtet wird.

9. Verfahren nach zumindest einem der Ansprüche 4 bis 8,
**dadurch gekennzeichnet,**
**dass** die Zusammensetzung durch Erwärmen für die Dauer von 1 bis 300 Sekunden gehärtet wird.

10. Verfahren nach zumindest einem der Ansprüche 4 bis 9,
**dadurch gekennzeichnet,**
**dass** der Zusammensetzung als eine weitere Komponente
h) ein anorganischer UV-Absorber, ausgewählt aus Zinkoxid, Ceroxid oder Titandioxid, oder ein Gemisch dieser anorganischen Absorber, und/oder ein organischer UV-Absorber, ausgewählt aus Hydroxyphenylbenzotriazol, Hydroxybenzophenon, HALS-Stabilisatoren, oder ein Gemisch dieser organischen Absorber,
zugemischt wird und die auf die Oberfläche aufgebrachte Zusammensetzung mit UV-Strahlen behandelt wird.

11. Verfahren nach Anspruch 10,
**dadurch gekennzeichnet,**
**dass** die Komponente h) in einer Menge von 0,5 bis 5 Gew.-%, wobei die Mengenangabe auf die Zusammensetzung bezogen ist, und mit der Maßgabe, dass die Summe der Gewichtsanteile der Komponenten a) bis h) 100 % ergibt, enthalten ist.

12. Silicium aufweisende Oberflächenbeschichtung erhältlich gemäß dem Verfahren eines der Ansprüche 4 - 11, **dadurch gekennzeichnet,**
**dass** die Oberflächenbeschichtung eine Kratzfestigkeit von 3 N bis 20 N aufweist, wobei die Kratzfestigkeit mit einem Schmissbeständigkeitsprüfer Modell 435 der Firma Erichsen GmbH & Co KG bestimmt wird.

13. Oberflächenbeschichtung nach Anspruch 12,
**dadurch gekennzeichnet,**
**dass** die Oberflächenbeschichtung eine Abriebfestigkeit von 0,1 bis 0,5 Gew.-% aufweist, wobei die Abriebfestigkeit mittels Taber Abraser mit dem Reibrad CS 10 und einer Auflagemasse von 500 g nach 100 Undrehungen als Gewichtsverlust ermittelt wird.

14. Oberflächenbeschichtung nach Anspruch 12 oder 13,
**dadurch gekennzeichnet,**
**dass** die Oberflächenbeschichtung eine Dehnbarkeit von 0,5 bis 10 % aufweist.

15. Oberflächenbeschichtung nach zumindest einem der Ansprüche 12 bis 14,
**dadurch gekennzeichnet,**
**dass** die Oberflächenbeschichtung thermische Verschweißbarkeit aufweist.

16. Artikel mit zumindest einer polymeren Oberfläche,
die eine Oberflächenbeschichtung nach zumindest einem der Ansprüche 12 bis 15 aufweist.

17. Verwendung eines Artikels nach Anspruch 16
für die Verkleidung von Apparaturen, Armaturen, Instrumenten, Messinstrumenten, Sanitäreinrichtungen, Küchengeräten, Haushaltgeräten, Fahrzeuginterieur, Cockpits, Displays, Sichtfenstern oder Möbeln.

## Claims

1. A composition which contains
a) at least one reaction product of
a1) a silane of the general formula 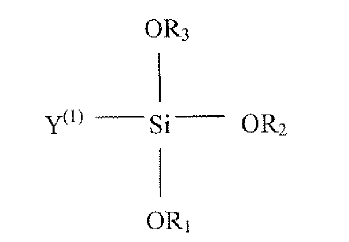 in which
Y⁽¹⁾ = 3-glycidyloxypropyl-, and
R₁, R₂, R₃ = like or unlike alkyl groups having 1 to 6 carbon atoms, and
a2) a silane of the general formula 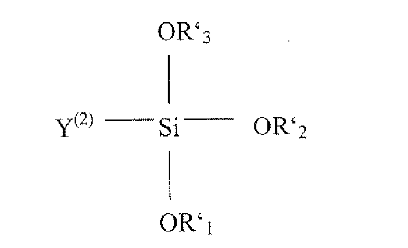 in which
Y⁽²⁾ = N-2-aminoethyl-3-aminopropyl- or NH₂(CH₂)₂NH(CH₂)₂NH(CH₂)₃-, and
R'₁, R'₂, R'₃ = like or unlike alkyl groups having 1 to 6 carbon atoms, and
b) at least one inorganic filler, and
c) a solvent having a boiling point at a temperature ≤ 85°C, and
d) water, and
e) a catalyst selected from organic and inorganic acids.

2. A composition according to claim 1, **characterized in that** the inorganic filler has an average particle size d_{50%} from 10 to 200 nm.

3. A composition according to claim 1 or 2, **characterized in that** the composition contains a further component
a3) which is at least one reaction product of a further silane 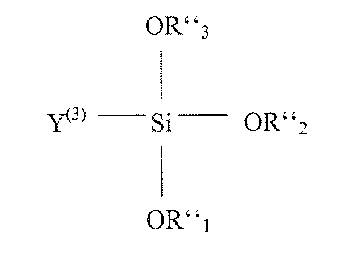
in which Y⁽³⁾ is selected from fluoro-, fluoroalkyl-, methacryloyl-, vinyl- and mercapto-, and
R"₁, R"₂, R"₃ = like or unlike alkyl groups having 1 to 6 carbon atoms.

4. A method of producing a surface coating on a polymeric surface, **characterized in that** a composition according to at least one of claims 1 to 3 is applied to the polymeric surface by dipping, spreading, knifecoating, brushing, rolling, roller-coating or spraying and is cured thereon.

5. A method according to claim 4, **characterized in that** the composition is admixed with component
a1) in an amount from 5% to 40% by weight, and
a2) in an amount from 5% to 50% by weight, and
b) in an amount from 2% to 20% by weight, and
c) in an amount from 20% to 60% by weight, and
d) in an amount from 0.5% to 5% by weight, and
e) in an amount from 0.02% to 0.5% by weight,
the specified amount being based in each case on the composition, and with the proviso that the sum of the weight fractions makes 100%.

6. A method according to claim 4 or 5, **characterized in that** the composition is admixed with component a1) and a2) in a molar ratio from 1:3 to 3:1.

7. A method according to at least one of claims 4 to 6, **characterized in that** the composition is admixed with component a3) in an amount from 0.5% to 10% by weight, the specified amount being based on the composition, and with the proviso that the sum of the weight fractions of component a1), a2), a3) and b) to e) makes 100%.

8. A method according to at least one of claims 4 to 7, **characterized in that** the composition is heated to a temperature from 90°C to 150°C, as a result of which the composition is cured.

9. A method according to at least one of claims 4 to 8, **characterized in that** the composition is cured by heating for a duration from 1 to 300 seconds.

10. A method according to at least one of claims 4 to 9, **characterized in that** the composition is admixed with, as a further component,
h) an inorganic UV absorber selected from zinc oxide, cerium oxide and titanium dioxide, or a mixture of these inorganic absorbers, and/or an organic UV absorber selected from hydroxy-phenylbenzotriazole, hydroxybenzophenone and HALS stabilizers, or a mixture of these organic absorbers,
and the composition applied to the surface is treated with UV rays.

11. A method according to claim 10, **characterized in that** component h) is present in an amount from 0.5% to 5% by weight, the specified amount being based on the composition, and with the proviso that the sum of the weight fractions of components a) to h) makes 100%.

12. A silicon-containing surface coating obtainable by the method of one of claims 4 to 11, **characterized in that** the surface coating has a scratch resistance from 3 N to 20 N, the scratch resistance being determined with a mar resistance tester model 435 from Erichsen GmbH & Co KG.

13. A surface coating according to claim 12, **characterized in that** the surface coating has an abrasion resistance from 0.1% to 0.5% by weight, the abrasion resistance being determined using the Taber Abraser fitted with the CS 10 abrading wheel and with an applied mass of 500 g, after 100 rotations, as weight loss.

14. A surface coating according to claim 12 or 13, **characterized in that** the surface coating has an extensibility from 0.5% to 10%.

15. A surface coating according to at least one of claims 12 to 14, **characterized in that** the surface coating exhibits thermal weldability.

16. An article having at least one polymeric surface which has a surface coating according to at least one of claims 12 to 15.

17. The use of an article according to claims 16 for lining apparatus, fittings, instruments, measuring-instruments, sanitary installations, kitchen appliances, household appliances, vehicle interiors, cockpits, displays, viewing windows or furniture.

## Revendications

1. Composition qui contient
a) au moins un produit de transformation
a1) d'un silane de formule générale 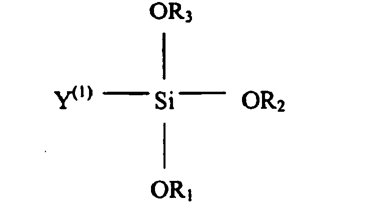 où
Y⁽¹⁾ = 3-glycidyloxypropyl-, et
R₁, R₂, R₃ = des radicaux alkyle identiques ou différents comprenant 1 à 6 atomes de carbone, et
a2) d'un silane de formule générale 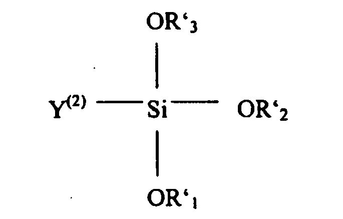 où
Y⁽²⁾ = N-2-aminoéthyl-3-aminopropyl- ou NH₂(CH₂)₂NH(CH₂)₂NH(CH₂)₃-
et R'₁, R'₂, R'₃ = des radicaux alkyle identiques ou différents comprenant 1 à 6 atomes de carbone, et
b) au moins une charge inorganique, et
c) un solvant présentant un point d'ébullition à une température ≤ 85°C, et
d) de l'eau, et
e) un catalyseur, choisi parmi les acides inorganiques ou organiques.

2. Composition selon la revendication 1, **caractérisée en ce que** la charge inorganique présente une grosseur moyenne de particule d_{50%} de 10 à 200 nm.

3. Composition selon la revendication 1 ou 2, **caractérisée en ce que** la composition contient un autre composant
a3) qui est au moins un produit de transformation d'un autre silane 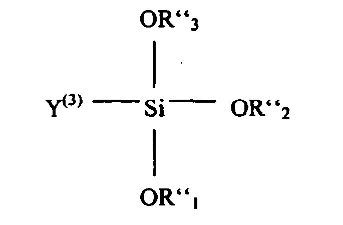 Y⁽³⁾ étant choisi parmi fluoro-, fluoroalkyl-, méthacryl-, vinyl-, mercapto-, et R"₁, R"₂, R"₃ = des groupes alkyle identiques ou différents comprenant 1 à 6 atomes de carbone.

4. Procédé pour la préparation d'un revêtement de surface sur une surface polymère, **caractérisé en ce qu'**on applique une composition selon au moins l'une quelconque des revendications 1 à 3 sur la surface polymère par imprégnation, enduction, raclage, badigeonnage, au rouleau, par laminage ou par pulvérisation et on y durcit la composition.

5. Procédé selon la revendication 4, **caractérisé en ce qu'**on mélange, dans la composition, les composants
a1) en une quantité de 5 à 40% en poids, et
a2) en une quantité de 5 à 50% en poids, et
b) en une quantité de 2 à 20% en poids, et
c) en une quantité de 20 à 60% en poids, et
d) en une quantité de 0,5 à 5% en poids, et
e) en une quantité de 0,02 à 0,5% en poids,
l'indication de quantités se rapportant à chaque fois à la composition et à la condition que la somme des proportions en poids soit égale à 100%.

6. Procédé selon la revendication 4 ou 5, **caractérisé en ce qu'**on mélange dans la composition les composants a1) et a2) dans un rapport molaire de 1:3 à 3:1.

7. Procédé selon au moins l'une quelconque des revendications 4 à 6, **caractérisé en ce qu'**on mélange, dans la composition, le composant a3) en une quantité de 0,5 à 10% en poids, l'indication de quantités se rapportant à la composition et à la condition que la somme des proportions en poids des composants a1), a2), a3) et b) à e) soit égale à 100%.

8. Procédé selon au moins l'une quelconque des revendications 4 à 7, **caractérisé en ce que** la composition est chauffée à une température de 90°C à 150°C, ce qui durcit la composition.

9. Procédé selon au moins l'une quelconque des revendications 4 à 8, **caractérisé en ce que** la composition est durcie par chauffage pendant une durée de 1 à 300 secondes.

10. Procédé selon au moins l'une quelconque des revendications 4 à 9, **caractérisé en ce qu'**on mélange dans la composition, comme autre composant
h) un absorbant inorganique des UV, choisi parmi l'oxyde de zinc, l'oxyde de cérium ou le dioxyde de titane ou un mélange de ces absorbants inorganiques et/ou un absorbant organique des UV choisi parmi l'hydroxyphénylbenzotriazole, l'hydroxybenzophénone, les stabilisants de type HALS ou un mélange de ces absorbants organiques,
et la composition appliquée sur la surface est traitée par des rayons UV.

11. Procédé selon la revendication 10, **caractérisé en ce que** le composant h) est contenu en une quantité de 0,5 à 5% en poids, l'indication de quantités se rapportant à la composition et à la condition que la somme des proportions en poids des composants a) à h) soit égale à 100%.

12. Revêtement de surface présentant du silicium pouvant être obtenu selon le procédé selon l'une quelconque des revendications 4 à 11, **caractérisé en ce que** le revêtement de surface présente une résistance aux rayures de 3 N à 20 N, la résistance aux rayures étant déterminée au moyen d'un appareil de test de la résistance au marquage modèle 435 de la société Erichsen GmbH & Co KG.

13. Revêtement de surface selon la revendication 12, **caractérisé en ce que** le revêtement de surface présente une résistance à l'abrasion de 0,1 à 0,5% en poids, la résistance à l'abrasion étant déterminée à l'aide d'une machine d'abrasion Taber équipée d'une roue d'abrasion CS 10 et à une masse d'appui de 500 g après 100 rotations comme perte de poids.

14. Revêtement de surface selon la revendication 12 ou 13, **caractérisé en ce que** le revêtement de surface présente une extensibilité de 0,5 à 10%.

15. Revêtement de surface selon au moins l'une quelconque des revendications 12 à 14, **caractérisé en ce que** le revêtement de surface présente une aptitude au soudage thermique.

16. Objet présentant au moins une surface polymère, qui présente un revêtement de surface selon au moins l'une quelconque des revendications 12 à 15.

17. Utilisation d'un objet selon la revendication 16 pour le revêtement d'appareils, d'armatures, d'instruments, d'instruments de mesure, des dispositifs sanitaires, d'appareils de cuisine, d'appareils domestiques, d'intérieurs de véhicule, de cockpits, d'affichages, de fenêtres ou de meubles.
